# EUROPEAN PATENT APPLICATION

(11) **EP 2 236 045 A1**
(43) Date of publication of application: **06.10.2010**
(21) Application number: 10158641.0
(22) Date of filing: 31.03.2010
(51) Int. Cl.: A23L 1/36

(54) **Chocolate Roast Process for Almonds**

(30) Priority: 01.04.2009 US 384235
(71) Applicant: Diamond Foods, Inc., San Francisco, CA 94111 (US)
(72) Inventor: Mattson, Peter H., Hillsborough CA 94010 (US); Paloncy, Marianne, Mill Valley CA 94941 (US); Gorang, Gregory, Turlock CA 95382 (US)
(74) Representative: Meyer, Ludgerus

(57) **Abstract**

An almond roasting process avoids a compound coating while being advantageously nutritionally low in calories and excellent in taste. The almonds are sprayed with a liquid starch blend in a drum, then coated with a dry blend of seasonings to adhere the seasonings to the almonds. The seasoning-coated almonds are continuously conveyed through a dry roast oven.

## Description

### Background of the Invention

This application claims benefit of provisional application Serial No. 61/123,031, filed April 4, 2008.

The invention concerns processing of foods, and in particular processing of almonds or other nuts in a way to add a chocolate or other coating to roasted nuts without adding significant calories to the nuts.

Conventionally chocolate coated almonds have been prepared by first roasting the almonds, then adding a "compound coating" to the roasted almonds. The coating typically included hydrogenated fat, coconut oil, cocoa butter, sugar and chocolate. This process added fat, sugar and calories to the almonds, and usually the additional calories represented a fifty percent to one hundred percent addition to the basic calories of the almonds themselves.

In the typical conventional process the almonds were first roasted, then the compound coating was applied (normally hot) to the roasted almonds, and air was used for solidifying the coating onto the almonds.

Another process for adding flavoring to almonds, without compound coating, has been tried but has not been entirely successful. Almonds have a small surface area relative to density, making it difficult to place enough sugar onto the almond surface. The process has involved placing as much sugar and flavorings as possible onto the surface of the cooked nut. The sugar and flavoring does not hold well on the surface of the almond and tends to leave considerable residue on the fingers when consumed.

### Summary of the Invention

In the process of the current invention a chocolate coating is placed on roasted almonds without using a compound coating, without sugar or fat, and with virtually no caloric addition to the almonds. The process of the invention adds essentially the same level of flavor to the almond as in the previous compound coating process, but without the added calories, sugar or fat. The roasted, processed almonds retain essentially the same level of calories, sugar and fat as plain unprocessed almonds (a negligible amount of calories is added to the nut, but the coating added is lower in calories by weight than the nut itself).

In the process a non-nutritive, preferably high-intensity sweetener is combined with cocoa powders and/or other flavorings to provide the desired flavor. This combination is caused to stick to the surface of the almonds using a water and starch solution, which may be a potato starch. In the process the starch coating preferably is heated and is sprayed onto the almonds in a tumbler or drum, where the seasoning dry blend, which includes the flavoring, is also applied so as to be adhered to the almond surfaces via the sprayed starch mix. The coated almonds are introduced into a dry roast oven and the flavorings are toasted along with the almonds, typically around 300°F for about fifteen to twenty minutes, in a preferred implementation of the process.

In the preferred process described, a flavoring of cocoa and other chocolate flavors (or with other flavors) is roasted along with the almonds; cocoa does well with roasting (although chocolate, containing cocoa butter, is not heat stable). Also, the non-nutritive sweeteners that are used do not react in any negative way to roasting. This would not be possible with sugar, since it would caramelize in the roasting process, and in addition, a great deal more sugar would be required than is the case with high-intensity non-nutritive sweeteners.

In a variation of the above-described process, the nuts could first be roasted, then sprayed with the starch mixture, dusted with the seasoning dry blend and then dried. This process can be used for vanilla flavoring, for example, vanilla being sensitive to roasting and undergoing a change in flavor with roasting.

It is thus among the objects of the invention to achieve a full-flavored chocolate (or other flavored) roasted almond without the use of a compound coating, and in a way that retains essentially the same level of calories, sugar and fat as in the plain almond. These and other objects, advantages and features of the invention will be apparent from the following description of a preferred embodiment, considered along with the accompanying drawings.

### Description of the Drawings

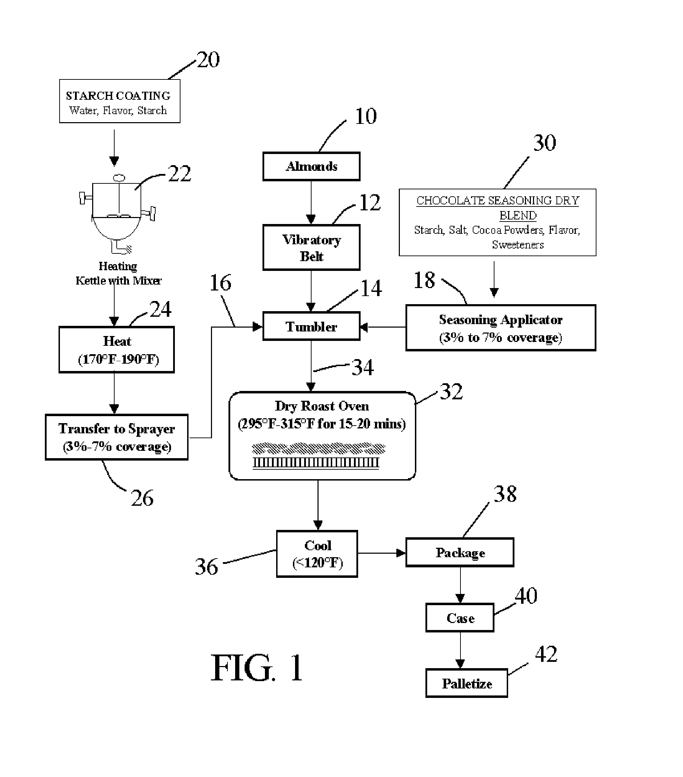

Figure 1 is a flow chart illustrating a preferred embodiment of the process of the invention.

### Description of Preferred Embodiments

In the drawing, almonds 10 are dumped onto a vibratory conveyor 12 as indicated. The almonds on the vibratory belt are accurately metered into a rotary drum mixing system or tumbler 14. In this tumbler or drum 14 a precise computer-controlled spray is applied to each nut as indicated at 16, and then dry seasoning is applied to the nuts in the tumbler as indicated at 18.

The drum speed can be in the range of about ten to fifteen revolutions per minute, as also controlled by the computer. Horizontal drum angle (tilt angle from horizontal) preferably is in the range of about 2° to 5°, preferably manually adjustable. This angle affects the dwell time of the product in the drum, and drum speed affects dwell time as well.

On the left side of the drawing is seen the system for preparing and applying the spray coating to the almonds or nuts. As indicated in the block 20, the starch coating includes water and starch, which may be a blend consisting of polysaccharides; the product Amylose Gum CLS, basically a potato starch, can be used. This mix can also optionally include flavor if desired. These ingredients are placed into a heating kettle/mixer as indicated at 22 in the block diagram, and are heated preferably to about 170°F to 190°F as indicated at 24. Following this, the heated, essentially liquid mix is transferred to a sprayer, illustrated at 26. The block 26 indicates the sprayer produces a coverage of the nuts which may be in the range of about 3% to 7% by weight (most of which will evaporate in the roaster).

On the right side of the drawing, the chocolate seasoning dry blend is indicated at 30. As shown in the block, the blend can include salt, cocoa powders, other flavoring, and sweeteners, the latter being high-intensity, non-nutritive sweeteners as discussed above. Starch can optionally be included in the seasoning blend, if desired.

As discussed above, the block 18 indicates application of the seasoning dry blend, which occurs after spraying, and this is shown as preferably producing 3% to 7% coverage of the nuts by weight. Higher coating levels can be used if desired. The nuts progress through the long drum, so that spraying and then dusting the seasoning blend can be done as separate sequential steps in the drum.

The coated almonds from the rotary drum mixing system 14 exit the drum and are conveyed to a dry roast oven 32, preferably via an oscillating swing conveyor, represented at 34. For the process in a preferred form, critical oven roast temperatures (295°F to 315°F), bed depth settings (about two inches to four inches) and roaster time parameters (about fifteen minutes to twenty minutes) are monitored and maintained. The coated nuts are moved continuously through the oven roaster on the swing conveyor or on another suitable type of conveyor. The roasting partially dehydrates the nuts as well as cooking them.

The oven roasted product is then cooled to less than about 120°F, as indicated in the block 36. After cooling, the nuts are then packaged (block 38) in a low oxygen environment (less than 2%), cased and palletized (as noted at blocks 40, 42).

The process as described above represents a preferred embodiment, and several aspects can vary. The pre-coating, prior to roasting, is preferred and is suitable for chocolate (cocoa and other chocolate flavoring), caramel, maple, mocha, cinnamon and several other flavor substances that do not react negatively to roasting. Vanilla flavor, as noted above, is considered non-roastable as it will change with roasting and should be applied after roasting. In a post-roast coating process the starch coating is sprayed and the seasoning dry blend is added in a tumbler or drum after roasting, and is then dried with heat, at about 150°F to 200°F. The temperature should be kept below about 200°F for vanilla.

In another variation of the process, the chocolate flavors and other flavors could be carried in the slurry with the starch, all to be sprayed together onto the nuts in the tumbler.

Some high-intensity, non-nutritive sweeteners that could be used are sucralose, acesulfame potassium and saccharine. The sweetener aspertame cannot be used for the roasting process as shown in the drawing because aspertame is not heat tolerant, but it could be used for the modified process wherein the coating is added after roasting.

Nuts other than almonds can be flavor coated using the same process. These can include peanuts, cashews, walnuts, pecans, hazelnuts and others.

The invention has several important advantages over the conventional compound coating process as described above: it is advantageous in nutritional aspects, primarily in avoiding the calories, sugar and fat of compound coating; the taste is excellent; cost is reduced; and shipping is more convenient and less expensive in that if the product is heated during summer shipping the coating on the nuts will not melt, in contrast with this problem in coated nut products.

The above described preferred embodiments are intended to illustrate the principles of the invention, but not to limit its scope. Other embodiments and variations to these preferred embodiments will be apparent to those skilled in the art and may be made without departing from the spirit and scope of the invention as defined in the following claims.

## Claims

1. A process for cooking and treating almonds with a flavor coating, comprising:
preparing a liquid starch blend,
introducing almonds into a tumbler or drum, and spraying the liquid starch blend onto the almonds in the tumbler or drum,
introducing a seasoning dry blend into the tumbler or drum so that the seasoning dry blend is adhered with the liquid starch blend to the almonds,
moving the seasoning-coated almonds into a dry roast oven and roasting the almonds with the seasoning, until the almonds are roasted, along with the seasoning, such that the seasoning is well-adhered to the almonds, and
cooling and packaging the seasoned, roasted almonds.

2. The process of claim 1, with dry roast oven temperature in the range of about 295ºF to 315ºF, and a dwell time in the dry roast oven of about fifteen to twenty minutes.

3. The process of claim 1, wherein the liquid starch blend includes sugar and starch.

4. The process of claim 1, further including heating the liquid starch blend to a temperature in the range of about 170ºF to 190ºF, prior to spraying the liquid starch blend.

5. The process of claim 1, wherein the step of spraying the liquid starch blend produces a coverage of the almonds of about 3% to 7% by weight.

6. The process of claim 1, wherein the seasoning dry blend includes chocolate flavoring.

7. The process of claim 1, wherein the seasoning dry blend includes salt, cocoa powder, and at least one sweetener.

8. The process of claim 1, wherein the seasoning dry blend includes starch.

9. The process of claim 1, wherein the tumbler or drum is maintained at a tilt angle from horizontal of about 2º to 5º.

10. The process of claim 1, wherein the tumbler or drum is a long, tilted, rotating drum, with the almonds progressing through the long drum, and the nuts being first sprayed with the liquid starch blend and then, downstream in the tumbler or drum, covered with the seasoning dry blend.

11. The process of claim 1, wherein the seasoning-coated almonds in the dry roast oven are at a bed depth of about two inches to four inches.

12. The process of claim 11, wherein the roast time in the dry roast oven is about fifteen minutes to twenty minutes.

13. The process of claim 1, wherein the seasoning-coated almonds are continuously conveyed through the dry roast oven for roasting, on a conveyor belt.

14. The process of claim 1, wherein the seasoning dry blend includes a high-intensity, non-nutritive sweetener, and wherein the seasoned, roasted almonds are approximately equal in calories to the untreated almonds.

15. The process of claim 1, wherein the seasoning dry blend is included in the liquid starch blend.

16. A process for cooking and treating almonds with a flavor coating, comprising:
moving the almonds into a dry roast oven and roasting the almonds,
preparing a liquid starch blend,
introducing the roasted almonds into a tumbler or drum, and spraying the liquid starch blend onto the almonds in the tumbler or drum,
introducing a seasoning dry blend including a non-roastable flavoring into the tumbler or drum so as to adhere the seasoning dry blend to surfaces of the roasted almonds by adhesion with the starch blend,
drying the roasted, seasoned almonds with heat, at a temperature below a temperature at which the non-roastable flavoring would be damaged, and
cooling and packaging the seasoned, roasted almonds.

17. Roasted, seasoned almonds produced according to the method of claim 1 or 16.
